# EUROPEAN PATENT SPECIFICATION

(11) **EP 3 218 777 B1**
(45) Date of publication and mention of the grant of the patent: **17.04.2019**
(21) Application number: 15794175.8
(22) Date of filing: 12.11.2015
(51) Int. Cl.: B63G 8/00, G05D 1/00

(54) **A METHOD OF CONTROLLING A SUBSEA PLATFORM, A SYSTEM AND A COMPUTER PROGRAM PRODUCT**
VERFAHREN ZUR STEUERUNG EINER UNTERWASSERPLATTFORM, SYSTEM UND COMPUTERPROGRAMMPRODUKT
PROCÉDÉ DE COMMANDE D'UNE PLATE-FORME SOUS-MARINE, SYSTÈME ET PRODUIT-PROGRAMME INFORMATIQUE

(30) Priority: 14.11.2014 NL 2013804
(43) Date of publication of application: 20.09.2017
(73) Proprietor: Fugro Subsea Services Ltd., Aberdeen Aberdeenshire AB23 8JW (GB)
(72) Inventor: TISDALL, Jason, Aberdeen Aberdeenshire AB23 8JW (GB); WILLIAMS, Jason, Aberdeen Aberdeenshire AB23 8JW (GB); TETLOW, Steve, Aberdeen Aberdeenshire AB23 8JW (GB); RHODES, Tim, Aberdeen Aberdeenshire AB23 8JW (GB)
(74) Representative: V.O.
(86) International application number: PCT/EP2015/076425
(87) International publication number: WO 2016/075231

(56) References cited:
- EP-A2- 1 879 148
- EP-A2- 2 416 124
- EP-A2- 2 607 854
- US-A1- 2007 018 887
- US-A1- 2008 215 204
- US-A1- 2011 227 944
- YUJIE LI ET AL: "Real-Time Visualization System for Deep-Sea Surveying", MATHEMATICAL PROBLEMS IN ENGINEERING, ARTICLE ID 723402, vol. 40, no. 1, 19 May 2014 (2014-05-19), pages 41-10, XP055209001, ISSN: 1024-123X, DOI: 10.1109/TIP.2003.819861

## Description

The invention relates to a method of controlling a subsea platform.

When operating a subsea platform such as a ROV underwater visibility is limited. Water attenuates light due to absorption, and the water may be turbid causing the ROV's light source to be backscatter. In addition, typical ROV pilot consoles utilize 2-D monitors with limited fields of view making it difficult for the pilot to interpret the ROV's spatial surroundings.

It is an object of the invention to facilitate operation of underwater platforms. Thereto, according to an aspect of the invention, a method of controlling a subsea platform is provided, comprising the steps of providing a database containing object information of objects identified in an environment wherein the platform is operating, generating visualization data of said objects, receiving camera image data from a camera unit disposed on the subsea platform, and composing an image structure based on the object visualization data and the camera image data, wherein the visualization data of said objects are generated using synthetic models thereof.

By using synthetic models for visualizing object data dedicated views for operators of subsea platforms are provided, e.g. by displaying objects as transparent cuboids or by adding synthetic views based on these synthetic models of said object data.

It is noted that patent publication EP 1 879 148 discloses a system and method for fusing sensor data and synthetic data to form an integrated image.

The invention also relates to a system.

Further, the invention relates to a computer program product. A computer program product may comprise a set of computer executable instructions stored on a data carrier, such as but not limited to a flash memory, a CD or a DVD. The set of computer executable instructions, which allow a programmable computer to carry out the method as defined above, may also be available for downloading from a remote server, for example via the Internet, e.g. as an app.

Other advantageous embodiments according to the invention are described in the following claims.

By way of example only, embodiments of the present invention will now be described with reference to the accompanying figures in which
Fig. 1 shows a system according to the invention;
Fig. 2 shows a schematic view of a subsea platform during operation;
Fig. 3A shows a first display configuration composed using a method according to the invention;
Fig. 3B shows a second display configuration composed using a method according to the invention, and
Fig. 4 shows a flow chart of an embodiment of a method according to the invention.

The figures merely illustrate preferred embodiments according to the invention. In the figures, the same reference numbers refer to equal or corresponding parts.

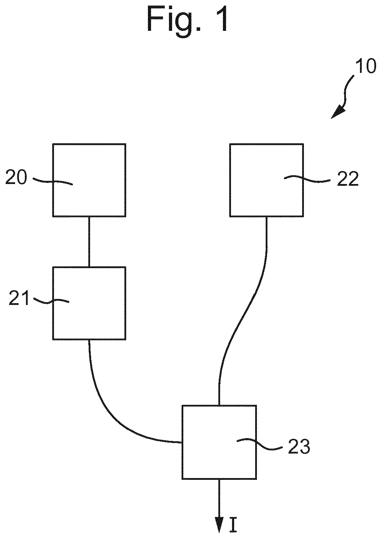

Figure 1 shows system 10 according to the invention. The system 10 is arranged for controlling a subsea platform such as a remotely operated vehicle ROV or another manned or unmanned subsea vessel. Thereto, the system 10 comprises a database 20 containing object information of objects identified in an environment wherein the subsea platform is operating. Further, the system 10 includes graphical models 21 for generating visualization data of said objects. In addition, the system 10 includes a receiving unit 22 receiving camera image data from a camera unit disposed on the subsea platform. The system 10 also comprises a processor 23 composing an image structure I based on the object visualization data and the camera image data. Here, the visualization data of said objects are generated using synthetic models thereof. Optionally, the processor is further arranged for performing physics simulation for estimating locations of identified objects.

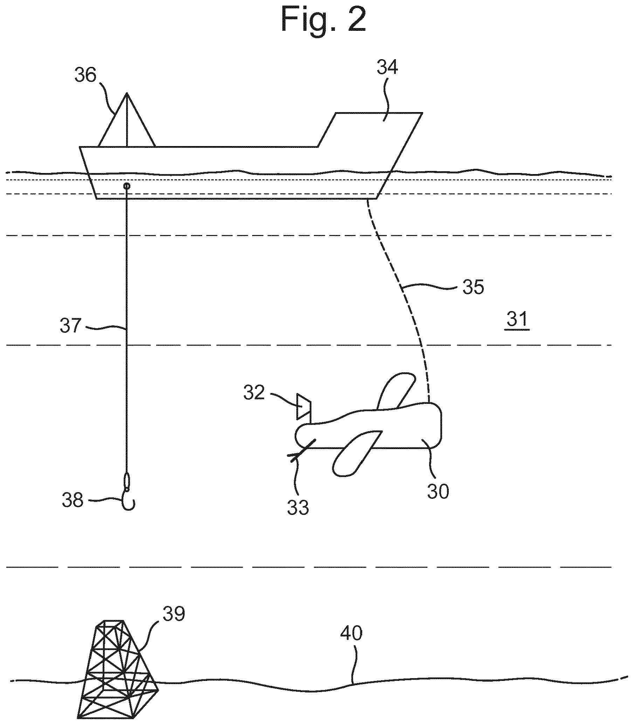

Figure 2 shows a schematic view of a subsea platform 30 during operation. The subsea platform 30 is a ROV travelling in a subsea environment 31. The ROV is provided with a camera 32 and a work tool 33. Further, the ROV is connected to a surface vessel 34 via a cable 35, e.g. for transmitting data signals. Alternatively, the subsea platform is an autonomous vehicle. Further, the subsea platform may have a wireless connection with a surface vessel, e.g. using an electromagnetic or sonic data transmission channel, possibly depending on local conditions in the subsea environment 31. The surface vessel 34 is also provided with a hoisting device 36 and a hoisting cable 37 carrying a further tool, in the shown embodiment a hook 38. The ROV may be operated for performing activities at a mechanical structure 39 at the sea bottom 40.

In order to facilitate operation of the ROV an imaging technique is applied as described below. During operation, the database 20 of the system 10 is used for providing information of the environment 31 wherein the ROV is operating. The database 20 contains object information of objects such as the hook 38 identified in said environment 31. Objects around the ROV can be identified using a variety of sensors and/or other sources of information. In principle, the static or dynamic position of these identified objects relative to the platform can in principle be determined using such information. As an example, software algorithms can be applied to process one or more camera signals captured from the platform 30. In this process, knowledge of the expected subsea topology, known objects, recognisable landmarks, locations of cameras relative to a frame of reference and other factors may be used. As a further example, object information may be retrieved from sonar return data, position sensor data, magnetic data, radioactive data, seismic data, material property data, map data, engineering data, plans and procedural data, force data, acceleration data, mass data, static data, dynamic data. In addition there is a time based history of all data.

Generally, also the ROV has a position and orientation in the environment 31 such as a sea or an ocean. The position and orientation of the ROV can be measured using various sensors.

From said objection information visualization data is generated, using synthetic models of said objects. As an example, three-dimensional graphical models "3D Models" of the subsea world are applied containing rich data including but not limited to physical properties, dimensional properties, location properties, and their display properties. The display properties allow graphical models to be conditioned so that they are suitable for a range of different display applications including 3D rendered views, augmented reality "AR" overlay views, combined camera and rendered views and other views. As an alternative, a 3D transparent cuboid bounding box can be displayed so that a user's view is not blocked, while optionally providing the user with information about size, orientation and/or distance of the object.

Alternate models are 2D images or text or symbols "2D models" and can be displayed and manipulated in similar ways as "3D Models".

Generally, the platform 30 is dynamic and mobile. Further, the platform 30 may carry tools 33 such as a manipulator or custom tooling as shown in Fig. 2. The tools 33 themselves are also dynamic. Control signals for the tools 33 may be augmented by object location knowledge to remove unwanted or undesirable motion and so simplify application of the tools 33. The tools 33 may also be controlled using paths defined within the software, or by arbitrary control interfaces that allow motion in alternate joint or coordinate spaces.

Any additional information about the environment wherein the ROV is operating in provided to a ROV pilot or operator may increase the safety and success of a subsea mission. Moreover it is advantageous to provide this information in such a way that it can be processed by the ROV pilot while simultaneously performing the task of piloting the ROV.

During operation, camera image data is received from the camera unit 32 disposed on the ROV. Then, an image structure is composed based on the object visualization data and the camera image data.

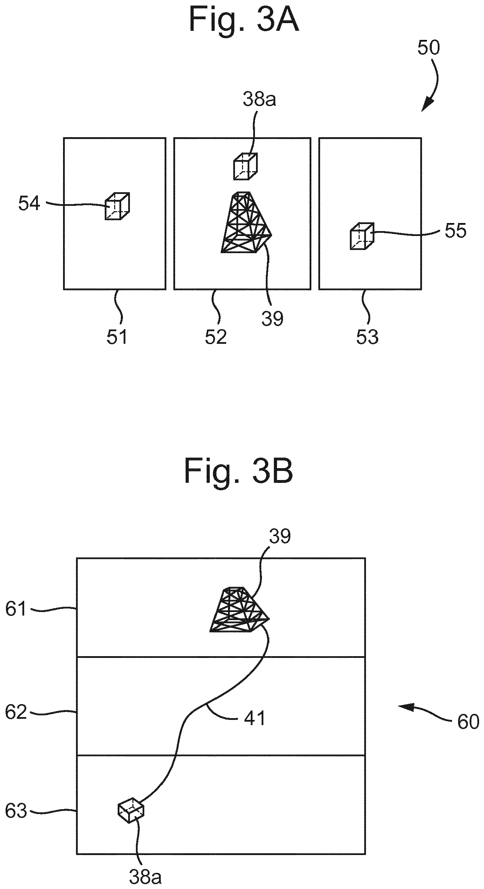

Figure 3A shows a first display configuration 50 composed using a method according to the invention. In the display configuration 50 the hook 38 as well as the mechanical structure 39 is visible. The mechanical structure 39 is shown as captured by the camera 32 on the ROV. However, the hook 38 is shown as a cuboid 38a. Here, an augmented reality view is composed by superposing a live image of the camera with the cuboid 38a of the hook 38. Preferably, the cuboid 38a is transparent so that the user's view is not blocked.

The augmented reality view shows a cuboid at an object location instead of a graphical overlay. In this way the pilot can still view the actual object. Such techniques are especially useful in low visibility environments. Fig. 3A shows the cuboid overlay 38a on the live image of the camera 32.

Generally, a cuboid is a convex polyhedron bounded by six quadrilateral faces. Preferably, each of the faces is a rectangle.

Preferably, object cuboids can be enabled and disabled. In this way the augmented reality world does not become cluttered. Further, object cuboids may include information about the object such as dimensions, type of object or other metadata. The visualization of the object cuboids may be arranged such that more information becomes visible when the ROV approaches the respective object.

Advantageously, the cuboid is displayed using either a chromakey or lumakey algorithm in which specific colours or luminance thresholds may be masked out of the augmented image so that those parts do not appear on the camera view.

In a specific embodiment, the image structure includes a plan view displaying the position of the platform relative to the identified objects. As an example, the plan view is available in a corner of the augmented reality view. In this way the ROV pilot can see the ROV's position relative to other objects. Optionally, the plan view rotates with the view. By providing a rotating map aligned with the orientation of the ROV, a strong sense of the ROV's location in the environment can be obtained, e.g. applying a forward-up orientation.

Optionally, the image structure includes an augmented reality view including a live view based on the camera image data and object visualization data, wherein the image structure further includes a synthetic view adjacent to the augmented reality view, the synthetic view being based on synthetic models of identified objects, preferably together with a synthetic view of the environment and the seabed. In the first display configuration 50 shown in Fig. 3A, three display portions are shown, e.g. a left-hand side display portion 51, a central display portion 52 and a right-hand side display portion 53. The above-mentioned augmented reality view is displayed in the central display portion 52. Further, the above-mentioned synthetic views are displayed in the left-hand side and the right-hand side display portions 51, 53. The synthetic views 51, 53 each contain further object cuboids 54, 55.

Synthetic views can be based on the ROV's positional information, positional information of objects and environment information. The synthetic viewing angle may correspond to that of the ROV camera or may be chosen by an operator, pilot or navigator viewing the display configuration 50. Here, real and synthetic views may be combined in a continuous scene i.e. you look ahead and see the camera view with AR overlay. As you turn your head out of the range of the real camera, the view continues but is now synthetic.

Advantageously, a live view in the image structure is distorted so as to simulate a synthetic point of view. Then, the viewpoint can be arbitrarily moved by distorting the live camera part of the image to be appropriately oriented to represent the original view. In this way, the operator can move out to a more convenient remote orientation but still see at a glance where a return to the live camera view will place his viewpoint in the world.

Figure 3B shows a second display configuration 60 composed using a method according to the invention. Again, the display configuration 60 includes three display portions, viz. a top display portion 61, a central display portion 62 and a bottom display portion 63. The display configuration has a non-linear scale on the vertical axis. In the shown embodiment, the scale is logarithmic so that the display configuration may show details of objects in the close neighbourhood of the ROV as well as a general overview of the environment on a larger scale. Here, the top display portion 61 shows a view covering distances from 1 km - 10 km, the central display portion shows a view covering distances from 100 m - 1 km, and the bottom view 63 shows a view covering distances to 100 m. The display portions 61, 62, 63 display subsequent distance ranges so that the vertical axis is continuous, however at a logarithmic scale, thus simulating a birds-eye view. In the embodiment shown in Fig. 3B a cuboid object 38a is displayed in the bottom display portion 63 while a mechanical structure 39 is shown in the top display portion 61. The display configuration further shows a pipelay path 41 extending from the top display portion 61 via the central display portion 62 to the bottom display portion 63, between the cuboid object 38a and the mechanical structure 39. It is noted that, in principle, also another non-linear vertical scale can be chosen. Preferably, objects have been scaled based on their location.

In an alternative approach, the image portions 61, 62, 63 represent images having the same orientation but a different synthetic point of view, thereby also simulating a birds-eye view. As an additional overlay on the camera view, or as a separate view on a different screen, a linear or logarithmic scale can be applied on each image portion. Then, important features may thus be shown at appropriate size enabling highlighting of detailed near features together with more distant features in a single meaningful display configuration 60. As an example, the top display portion 61 may show a 0 - 100m overlaid, the central display portion 62 may show a 0 km - 1 km overlaid, and the bottom display portion 63 may show a 0 km - 10km overlaid, thereby providing scaled display views showing objects in a close view, in a more removed view and in a remote view 39c.

Optionally, the image structure includes a downwardly oriented view, e.g. relative to the ROV's perspective. In this way pilots can verify that the ROV is not interfering with objects positioned under the ROV. The downwardly oriented view may be part of a continuous synthetic view as explained above or could be a separate view.

Combined applications are also possible, for example automatic station keeping. Positional feedback may also be used to change ROV tool paths. Also, camera image data may be compensated for movements of the ROV. In this way the tool path can compensate for ROV motion. For example, if the tool must be extracted in a straight line. Further, movements of an actuator 33 controlled by the ROV may be compensated for movements of the ROV.

In a specific embodiment, the image structure includes a synthetic view of a tool operated by an operator controlled interface, wherein the position and orientation of the tool in the synthetic view is based on manipulation data generated on the interface such as a sensor array on a glove.

Further, information of a previous operation and/or inspection may be included in the image structure. This information could result in event triggered actions, for example semi/fully automated repairs may occur. This improves asset integrity. As an example, the image structure includes overlay information from a previous operation and/or inspection. This would allow a pilot to view how the scene diverges from a previous inspection. For example, an object may have shifted or changed since the previous inspection.

Advantageously, the object information includes actual location information of tools applied by the subsea platform, optionally by simulating a tool location based on remote parameter values such as a length of a hoisting cable and/or direction and magnitude of sea current. Live positioning of objects in the environment, such as a device being lowered from the surface vessel via a crane, may thus also be combined in the image structure without using beacon sensors. So not just static objects but also dynamic objects, and simulated ropes, cables or risers may be selected as important and overlaid in a geographically correct location in the pilots view. Such objects include, but are not limited to, ROVs, subsea compressors, BOPs, mats, spool pieces, tethers, umbilicals, manipulators and tools.

Generally, the location of the subsea platform and/or a camera on the subsea platform is measured using physical sensors. Also, the location of an identified object can be measured using physical sensors such as sonar. However, the location of an identified object can also be estimated from a simulation model such as a static or real-time physics simulation rather than from live sensor data.

The joining of virtual reality and live camera views in the same contiguous viewing space is referred to as Mixed Reality "MR", and when combined with additional useful data overlays is referred to as Mediated Mixed Reality "MMR".

Where MRR is presented to the operator via a headset, then it is referred to as Immersive Mediated Mixed Reality "IMMR". In this case, the traditional manual controls are no longer visible to the operator. Instead, virtual interfaces may be used to allow real tools and platforms to be controlled by an operator using appropriate combinations of the above technologies.

The MMR technique displays a range of processed outcomes to provide important meta-data for the operator. This may include virtual tool locations, virtual depth sensors, and/or relative position data in various frames of reference such as a global frame, a tool frame, a local frame, a polar frame or a Cartesian frame.

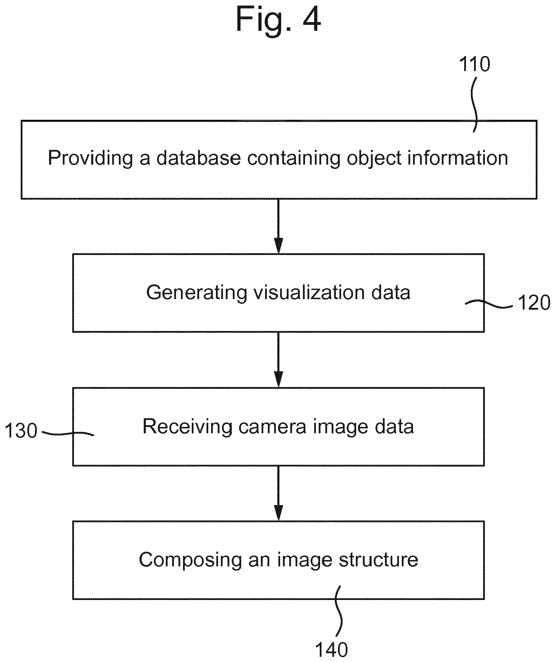

Figure 4 shows a flow chart of an embodiment of a method according to the invention. The method is used for controlling a subsea platform. The method comprises a step of providing 110 a database containing object information of objects identified in an environment wherein the platform is operating, a step of generating 120 visualization data of said objects, a step of receiving 130 camera image data from a camera unit disposed on the subsea platform, and a step of composing 140 an image structure based on the object visualization data and the camera image data, wherein the visualization data of said objects are generated using synthetic models thereof. As described above, positioning data of objects can be processed, either from sensors measuring object locations or as a result of physics simulation estimating the respective locations of the objects. The method of controlling a subsea platform can be performed using dedicated hardware structures, such as FPGA and/or ASIC components. Otherwise, the method can also at least partially be performed using a computer program product comprising instructions for causing a processor of a computer system or a control unit to perform the above described steps of the method according to the invention, or at least the step of composing an image structure based on the object visualization data and the camera image data. All steps can in principle be performed on a single processor. However, it is noted that at least one step can be performed on a separate processor. A processor can be loaded with a specific software module. Dedicated software modules can be provided, e.g. from the Internet.

The invention is not restricted to the embodiments described herein. It will be understood that many variants are possible.

These and other embodiments will be apparent for the person skilled in the art and are considered to fall within the scope of the invention as defined in the following claims. For the purpose of clarity and a concise description features are described herein as part of the same or separate embodiments. However, it will be appreciated that the scope of the invention may include embodiments having combinations of all or some of the features described.

## Claims

1. A method of controlling a subsea platform, comprising the steps of:
- providing (110) a database containing object information of objects identified in an environment wherein the platform is operating;
- generating (120) visualization data of said objects;
- receiving (130) camera image data from a camera unit disposed on the subsea platform, and
- composing (140) an image structure based on the object visualization data and the camera image data,
wherein the visualization data of said objects are generated using synthetic models thereof,
**characterized in that** the image structure includes an augmented reality view including a live view based on the camera image data and object visualization data, and wherein the image structure further includes a synthetic view being based on synthetic models of identified objects.

2. A method according to claim 1, wherein the synthetic model of an identified object is a transparent cuboid representing said object as an overlay on a live view based on the camera image data.

3. A method according to claim 2, wherein the cuboid can be disabled and enabled.

4. A method according to claim 1 or 2, wherein the cuboid is displayed using a chromakey algorithm or a lumakey algorithm.

5. A method according to any of the preceding claims, wherein the image structure includes a plan view displaying the position of the platform relative to the identified objects.

6. A method according to any of the preceding claims, wherein the synthetic view is adjacent to the augmented reality view.

7. A method according to claim 6, wherein a live view in the image structure is distorted so as to simulate a synthetic point of view.

8. A method according to any of the preceding claims, wherein the image structure includes a rotating map aligning with the orientation of the platform, and/or wherein the image structure includes an image having a non-linear vertical axis, preferably a logarithmic vertical axis.

9. A method according to any of the preceding claims, wherein the image structure includes images having the same orientation but a different synthetic point of view, and/or wherein the image structure includes a downwardly oriented view.

10. A method according to any of the preceding claims, wherein the image structure is displayed to an operator or navigator of the subsea platform, and/or wherein the image structure includes a synthetic view of a tool operated by an operator controlled interface, wherein the position and orientation of the tool in the synthetic view is based on manipulation data generated on the interface.

11. A method according to any of the preceding claims, wherein information of a previous operation and/or inspection is included in the image structure, and/or wherein the image structure includes overlay information from a previous operation and/or inspection, and/or wherein the object information includes actual location information of tools applied by the subsea platform, optionally by simulating a tool location based on remote parameter values such as a length of a hoisting cable.

12. A method according to any of the preceding claims, wherein the location of the subsea platform and/or a camera on the subsea platform is measured using physical sensors, and/or wherein the location of an identified object is estimated from a simulation model.

13. A method according to any of the preceding claims, wherein camera image data is compensated for movements of the subsea platform, and/or wherein movements of an actuator controlled by the platform are compensated for movements of the subsea platform.

14. A system (10) for controlling a subsea platform (30), comprising:
- a database (20) containing object information of objects identified in an environment wherein the platform is operating;
- graphical models (21) for generating visualization data of said objects;
- a receiving unit (22) receiving camera image data from a camera unit (32) disposed on the subsea platform;
- a processor (23) composing an image structure based on the object visualization data and the camera image data,
wherein the visualization data of said objects are generated using synthetic models thereof,
**characterized in that** the image structure includes an augmented reality view including a live view based on the camera image data and object visualization data, and wherein the image structure further includes a synthetic view being based on synthetic models of identified objects.

15. A computer program product for controlling a subsea platform, the computer program product comprising computer readable code for causing a processor to perform the steps of:
- providing (110) a database containing object information of objects identified in an environment wherein the platform is operating;
- generating (120) visualization data of said objects;
- receiving (130) camera image data from a camera unit disposed on the subsea platform, and
- composing (140 an image structure based on the object visualization data and the camera image data,
wherein the visualization data of said objects are generated using synthetic models thereof,
**characterized in that** the image structure includes an augmented reality view including a live view based on the camera image data and object visualization data, and wherein the image structure further includes a synthetic view being based on synthetic models of identified objects.

## Patentansprüche

1. Verfahren zum Steuern einer Unterwasserplattform, umfassend die folgenden Schritte:
- Bereitstellen (110) einer Datenbank, die Objektinformationen von Objekten enthält, die in einer Umgebung identifiziert wurden, in der die Plattform arbeitet;
- Erzeugen (120) von Visualisierungsdaten der Objekte;
- Empfangen (130) von Kamerabilddaten von einer Kameraeinheit, die auf der Unterwasserplattform angeordnet ist, und
- Erstellen (140) einer Bildstruktur basierend auf den Objektvisualisierungsdaten und den Kamerabilddaten,
wobei die Visualisierungsdaten der Objekte unter Verwendung synthetischer Modelle davon erzeugt werden,
**dadurch gekennzeichnet, dass** die Bildstruktur eine erweiterte Realitätsansicht umfasst, die eine Live-Ansicht auf der Grundlage der Kamerabilddaten und Objektvisualisierungsdaten umfasst, und wobei die Bildstruktur weiter eine synthetische Ansicht umfasst, die auf synthetischen Modellen von identifizierten Objekten basiert.

2. Verfahren nach Anspruch 1, wobei das synthetische Modell
eines identifizierten Objekts ein transparenter Quader ist, der das Objekt als Überlagerung in einer Live-Ansicht basierend auf den Kamerabilddaten darstellt.

3. Verfahren nach Anspruch 2, wobei der Quader deaktiviert und aktiviert werden kann.

4. Verfahren nach Anspruch 1 oder 2, wobei der Quader unter Verwendung eines Chromakey-Algorithmus oder eines Lumakey-Algorithmus angezeigt wird.

5. Verfahren nach einem der vorhergehenden Ansprüche, wobei die
Bildstruktur eine Draufsicht umfasst, die die Position der Plattform relativ zu den identifizierten Objekten anzeigt.

6. Verfahren nach einem der vorhergehenden Ansprüche, bei dem die synthetische Ansicht an die Augmented-Reality-Ansicht angrenzt.

7. Verfahren nach Anspruch 6, wobei eine Live-Ansicht in der Bildstruktur verzerrt wird, um eine synthetische Ansicht zu simulieren.

8. Verfahren nach einem der vorhergehenden Ansprüche, wobei die
Bildstruktur eine rotierende Karte umfasst, die mit der Ausrichtung der Plattform ausgerichtet ist, und/oder wobei die Bildstruktur ein Bild mit einer nichtlinearen vertikalen Achse, vorzugsweise einer logarithmischen vertikalen Achse, umfasst.

9. Verfahren nach einem der vorhergehenden Ansprüche, wobei die Bildstruktur Bilder mit der gleichen Orientierung, jedoch einem anderen synthetischen Gesichtspunkt umfasst, und/oder wobei die Bildstruktur eine nach unten gerichtete Ansicht umfasst.

10. Verfahren nach einem der vorhergehenden Ansprüche, wobei die Bildstruktur einem Bediener oder Navigator der Unterwasserplattform angezeigt wird und/oder wobei die Bildstruktur eine synthetische Ansicht eines Werkzeugs umfasst, das von einer bedienergesteuerten Schnittstelle bedient wird, wobei die Position und die Ausrichtung des Werkzeugs in der synthetischen Ansicht auf an der Schnittstelle generierten Manipulationsdaten basieren.

11. Verfahren nach einem der vorhergehenden Ansprüche, wobei Informationen einer vorherigen Operation und/oder Inspektion in der Bildstruktur enthalten sind und/oder wobei die Bildstruktur Overlay-Informationen von einer vorherigen Operation und/oder Inspektion enthält, und/oder wobei die Objektinformationen tatsächliche Standortinformationen von Werkzeugen umfassen, die von der Unterwasserplattform angewendet werden, optional durch Simulieren eines Werkzeugstandortes auf der Grundlage von Fernparameterwerten, wie z. B. einer Länge eines Hebeseils.

12. Verfahren nach einem der vorhergehenden Ansprüche, wobei der Standort der Unterwasserplattform und/oder einer Kamera auf der Unterwasserplattform unter Verwendung physikalischer Sensoren gemessen wird und/oder wobei der Standort eines identifizierten Objekts aus einem Simulationsmodell geschätzt wird.

13. Verfahren nach einem der vorhergehenden Ansprüche, wobei Kamerabilddaten für Bewegungen der Unterwasserplattform kompensiert werden und/oder wobei Bewegungen eines durch die Plattform gesteuerten Stellglieds für Bewegungen der Unterwasserplattform kompensiert werden.

14. System (10) zum Steuern einer Unterwasserplattform (30), umfassend:
- eine Datenbank (20), die Objektinformationen von Objekten enthält, die in einer Umgebung identifiziert wurden, in der die Plattform arbeitet;
- grafische Modelle (21) zum Erzeugen von Visualisierungsdaten der Objekte;
- eine Empfangseinheit (22), die Kamerabilddaten von einer Kameraeinheit (32) empfängt, die auf der Unterwasserplattform angeordnet ist;
- einen Prozessor (23), der eine Bildstruktur basierend auf den Objektvisualisierungsdaten und den Kamerabilddaten zusammenstellt,
wobei die Visualisierungsdaten der Objekte unter Verwendung synthetischer Modelle davon erzeugt werden,
**dadurch gekennzeichnet, dass** die Bildstruktur eine erweiterte Realitätsansicht umfasst, die eine Live-Ansicht auf der Grundlage der Kamerabilddaten und Objektvisualisierungsdaten umfasst, und wobei die Bildstruktur weiter eine synthetische Ansicht umfasst, die auf synthetischen Modellen von identifizierten Objekten basiert.

15. Computerprogrammprodukt zum Steuern einer Unterwasserplattform, wobei das Computerprogrammprodukt computerlesbaren Code umfasst, um einen Prozessor zu veranlassen, die folgenden Schritte auszuführen:
- Bereitstellen (110) einer Datenbank, die Objektinformationen von Objekten enthält, die in einer Umgebung identifiziert wurden, in der die Plattform arbeitet;
- Erzeugen (120) von Visualisierungsdaten der Objekte;
- Empfangen (130) von Kamerabilddaten von einer Kameraeinheit, die auf der Unterwasserplattform angeordnet ist, und
- Erstellen (140) einer Bildstruktur basierend auf den Objektvisualisierungsdaten und den Kamerabilddaten,
wobei die Visualisierungsdaten der Objekte unter Verwendung synthetischer Modelle davon erzeugt werden,
**dadurch gekennzeichnet, dass** die Bildstruktur eine Augmented-Reality-Ansicht umfasst, die eine Live-Ansicht auf der Grundlage der Kamerabilddaten und Objektvisualisierungsdaten umfasst, und wobei die Bildstruktur weiter eine synthetische Ansicht umfasst, die auf synthetischen Modellen von identifizierten Objekten basiert.

## Revendications

1. Procédé de commande d'une plate-forme sous-marine, comprenant les étapes consistant à :
- fournir (110) une base de données contenant des informations d'objet d'objets identifiés dans un environnement dans lequel la plate-forme fonctionne ;
- générer (120) des données de visualisation desdits objets ;
- recevoir (130) des données d'image de caméra en provenance d'une unité de caméra disposée sur la plate-forme sous-marine, et
- composer (140) une structure d'image sur la base des données de visualisation d'objet et des données d'image de caméra,
dans lequel les données de visualisation desdits objets sont générées à l'aide de modèles synthétiques de ceux-ci,
**caractérisé en ce que** la structure d'image comprend une vue en réalité augmentée comprenant une vue en direct basée sur les données d'image de caméra et des données de visualisation d'objet, et dans lequel la structure d'image comprend en outre une vue synthétique qui est basée sur des modèles synthétiques d'objets identifiés.

2. Procédé selon la revendication 1, dans lequel le modèle synthétique d'un objet identifié est un cuboïde transparent représentant ledit objet sous la forme d'une incrustation sur une vue en direct basée sur les données d'image de caméra.

3. Procédé selon la revendication 2, dans lequel le cuboïde peut être désactivé et activé.

4. Procédé selon la revendication 1 ou 2, dans lequel le cuboïde est affiché à l'aide d'un algorithme d'incrustation en chrominance ou d'un algorithme d'incrustation en luminance.

5. Procédé selon l'une quelconque des revendications précédentes, dans lequel la structure d'image comprend une vue plane affichant la position de la plate-forme par rapport aux objets identifiés.

6. Procédé selon l'une quelconque des revendications précédentes, dans lequel la vue synthétique est adjacente à la vue en réalité augmentée.

7. Procédé selon la revendication 6, dans lequel une vue en direct dans la structure d'image est déformée de manière à simuler un point de vue synthétique.

8. Procédé selon l'une quelconque des revendications précédentes, dans lequel la structure d'image comprend une carte tournante s'alignant avec l'orientation de la plate-forme, et/ou dans lequel la structure d'image comprend une image ayant un axe vertical non linéaire, de préférence un axe vertical logarithmique.

9. Procédé selon l'une quelconque des revendications précédentes, dans lequel la structure d'image comprend des images ayant la même orientation mais un point de vue synthétique différent, et/ou dans lequel la structure d'image comprend une vue orientée vers le bas.

10. Procédé selon l'une quelconque des revendications précédentes, dans lequel la structure d'image est affichée à l'intention d'un opérateur ou navigateur de la plate-forme sous-marine, et/ou dans lequel la structure d'image comprend une vue synthétique d'un outil actionné par une interface commandée par l'opérateur, la position et l'orientation de l'outil dans la vue synthétique étant basées sur des données de manipulation générées sur l'interface.

11. Procédé selon l'une quelconque des revendications précédentes, dans lequel des informations d'une opération et/ou d'une inspection précédentes sont incluses dans la structure d'image, et/ou dans lequel la structure d'image comprend des informations d'incrustation provenant d'une opération et/ou d'une inspection précédentes, et/ou dans lequel les informations d'objet comprennent des informations d'emplacement actuel d'outils appliqués par la plate-forme sous-marine, facultativement par simulation d'un emplacement d'outil sur la base de valeurs de paramètres distants telles qu'une longueur d'un câble de levage.

12. Procédé selon l'une quelconque des revendications précédentes, dans lequel l'emplacement de la plate-forme sous-marine et/ou d'une caméra sur la plate-forme sous-marine est mesuré à l'aide de capteurs physiques, et/ou dans lequel l'emplacement d'un objet identifié est estimé à partir d'un modèle de simulation.

13. Procédé selon l'une quelconque des revendications précédentes, dans lequel des mouvements de la plate-forme sous-marine sont compensés dans des données d'image de caméra, et/ou dans lequel des mouvements de la plate-forme sous-marine sont compensés dans des mouvements d'un actionneur commandé par la plate-forme.

14. Système (10) destiné à commander une plate-forme sous-marine (30), comprenant :
- une base de données (20) contenant des informations d'objet d'objets identifiés dans un environnement dans lequel la plate-forme fonctionne ;
- des modèles graphiques (21) pour générer des données de visualisation desdits objets ;
- une unité de réception (22) recevant des données d'image de caméra en provenance d'une unité de caméra (32) disposée sur la plate-forme sous-marine ;
- un processeur (23) composant une structure d'image sur la base des données de visualisation d'objet et des données d'image de caméra,
dans lequel les données de visualisation desdits objets sont générées à l'aide de modèles synthétiques de ceux-ci,
**caractérisé en ce que** la structure d'image comprend une vue en réalité augmentée comprenant une vue en direct basée sur les données d'image de caméra et des données de visualisation d'objet, et dans lequel la structure d'image comprend en outre une vue synthétique qui est basée sur des modèles synthétiques d'objets identifiés.

15. Produit programme d'ordinateur destiné à commander une plate-forme sous-marine, le produit programme d'ordinateur comprenant du code lisible par ordinateur pour amener un processeur à exécuter les étapes consistant à :
- fournir (110) une base de données contenant des informations d'objet d'objets identifiés dans un environnement dans lequel la plate-forme fonctionne ;
- générer (120) des données de visualisation desdits objets ;
- recevoir (130) des données d'image de caméra en provenance d'une unité de caméra disposée sur la plate-forme sous-marine, et
- composer (140) une structure d'image sur la base des données de visualisation d'objet et des données d'image de caméra,
dans lequel les données de visualisation desdits objets sont générées à l'aide de modèles synthétiques de ceux-ci,
**caractérisé en ce que** la structure d'image comprend une vue en réalité augmentée comprenant une vue en direct basée sur les données d'image de caméra et des données de visualisation d'objet, et dans lequel la structure d'image comprend en outre une vue synthétique qui est basée sur des modèles synthétiques d'objets identifiés.
